# EUROPEAN PATENT SPECIFICATION

(11) **EP 2 711 539 B1**
(45) Date of publication and mention of the grant of the patent: **17.01.2024**
(21) Application number: 13003938.1
(22) Date of filing: 07.08.2013
(51) Int. Cl.: F02P 5/15, F02D 11/10, F02D 9/02

(54) **Engine control device**
Motorsteuerungsvorrichtung
Dispositif de commande de moteur

(30) Priority: 25.09.2012 JP 2012211188
(43) Date of publication of application: 26.03.2014
(73) Proprietor: Hitachi Astemo, Ltd., Hitachinaka-shi, Ibaraki (JP)
(72) Inventor: Sugimori, Shigehiko, Tochigi, 3291233 (JP)
(74) Representative: v. Bezold & Partner Patentanwälte - PartG mbB

(56) References cited:
- WO-A2-2008/110889
- JP-A- H0 463 945
- JP-A- S63 124 867
- JP-A- 2008 095 607
- US-A- 5 692 471
- US-A- 5 765 527
- US-A1- 2010 050 987

## Description

### BACKGROUND OF THE INVENTION

The present invention relates to an engine control device, and more particularly relates to an engine control device that controls an ignition timing of an engine based on an operating state of the engine.

Generally, engine control devices have a function of setting an ignition timing so that an ignition plug is caused to spark discharge at an appropriate timing according to an operating state of an engine.

Specifically, when an operating state of an engine is in an acceleration state where an engine revolution number (engine speed) is increased, the engine control device executes advance control of advancing an ignition timing. However, when the ignition timing is advanced in a transient state where the operating state of the engine shifts from a state of a low engine revolution number to an acceleration state, the ignition timing is excessively advanced with respect to an optimum timing because of factors including a variation in an air-fuel ratio due to a sudden increase in a throttle valve opening degree, a variation in an increase rate of the engine revolution number, and the like. Consequently, it is conceivable that a so-called "acceleration shock" may occur in the vehicle.

Under such circumstances, Japanese Paten Application Laid-open Publication No. 2000-9007 relates to an ignition-timing control device of an internal-combustion engine, and discloses the following configuration. That is, when a change amount of a throttle valve opening degree is equal to or larger than a predetermined value, it is determined that an operating state of an engine is in a transient state of shifting to an acceleration state. An ignition timing is then retarded, thereby mitigating a variation in an engine output and suppressing an acceleration shock.

Furthermore, WO 2008/110889 A2 discloses that in a control device for an internal combustion engine having a throttle valve for adjusting the intake air amount that affects on the torque of the internal combustion engine, when a request for acceleration of the internal combustion engine is made, a torque gradient, which is a change in the torque of the internal combustion engine per unit time during the acceleration, is predicted based on an operating condition of the internal combustion engine before the acceleration, and the operation of the throttle valve is controlled based on the predicted torque gradient during the acceleration of the internal combustion engine.

### SUMMARY OF THE INVENTION

However, according to the studies by the present inventors, in the configuration of Japanese Paten Application Laid-open Publication No. 2000-9007, whether the ignition timing is retarded is determined based on the change amount of the throttle valve opening degree. Therefore, it is conceivable that the engine output has already been varied when the retard control is executed and the acceleration shock cannot be sufficiently suppressed.

Further, according to the studies by the present inventors, particularly in automatic two-wheeled vehicles, the vehicle weight is lighter and a response of a vehicle behavior to an engine output is quicker as compared to four-wheeled vehicles. Therefore, it is conceivable that a rider feels uncomfortable with even a slight variation in the engine output. Further, general automatic two-wheeled vehicles are configured so that an engine output is transmitted via a drive chain to a drive wheel. Therefore, there is a strong tendency that the drive chain is extended or shortened by even a slight increase or decrease in the engine output and such extension or shortening appears as an acceleration shock. It is thus conceivable that a rider feels uncomfortable with even a slight variation in the engine output. That is, in automatic two-wheeled vehicles particularly, it is conceivable that there is a great demand to sufficiently suppress an acceleration shock that may occur by an unnecessary variation in an engine output when the engine is in an acceleration state.

The present invention has been achieved in view of the above problems, and an object of the present invention is to provide an engine control device that can detect early and precisely that an operating state of the engine is in a transient state of shifting to an acceleration state and to appropriately control an ignition timing in the transient state, thereby reliably suppressing an acceleration shock to a vehicle.

The problem is solved by the features of independent claim 1.

To achieve the above object, a first aspect of the present invention is to provide an engine control device comprising: an electronically-controlled-throttle control unit that calculates a target throttle opening degree based on an accelerator opening degree and feedback-controls an opening degree of a throttle valve so as to match the target throttle opening degree; an ignition-timing control unit that controls an ignition timing of an engine based on an operating state of the engine; a transient-state determination-processing unit that determines whether the operating state of the engine is in a transient state of shifting to an acceleration state based on a change amount of the target throttle opening degree; and a transient-state correction-processing unit that retards the ignition timing by a predetermined amount set by the change amount when the transient-state determination-processing unit determines that the operating state of the engine is in the transient state.

According to a second aspect of the present invention, in addition to the first aspect, the change amount is a deviation amount between an amount based on an actual throttle opening degree of the throttle valve and an amount based on the target throttle opening degree.

The engine control device according to the first aspect of the present invention comprises a transient-state determination-processing unit that determines whether an operating state of an engine is in a transient state of shifting to an acceleration state based on a change amount of a target throttle opening degree and a transient-state correction-processing unit that retards an ignition timing by a predetermined amount set by the change amount when the transient-state determination-processing unit determines that the operating state of the engine is in the transient state. Therefore, the change amount of the target throttle opening degree is used as a parameter for determining an operating state of an engine, and thus it is possible to detect early and precisely that an operating state of the engine is in a transient state of shifting to an acceleration state and to appropriately control an ignition timing in the transient state, thereby reliably suppressing an acceleration shock.

In the engine control device according to the second aspect of the present invention, the change amount is a deviation amount between an amount based on an actual throttle opening degree of a throttle valve and an amount based on a target throttle opening degree. Therefore, by using the deviation amount between the amount based on the actual throttle opening degree of the throttle valve and the amount based on the target throttle opening degree as a parameter for determining an operating state of the engine, it is possible to detect a change amount and a change direction of the actual throttle opening degree of the throttle valve, and thus to detect early and precisely that an operating state of the engine is in a transient state of shifting to an acceleration state.

### BRIEF DESCRIPTION OF THE DRAWINGS

FIG. 1 is a block diagram of a configuration of an engine control device according to an embodiment of the present invention; and
FIG. 2 is a flowchart of a flow of an anti-jerk control process according to the present embodiment.

### DETAILED DESCRIPTION OF THE PREFERRED EMBODIMENT

An engine control device according to an embodiment of the present invention is explained below in detail with reference to the accompanying drawings.

### [Configuration of engine control device]

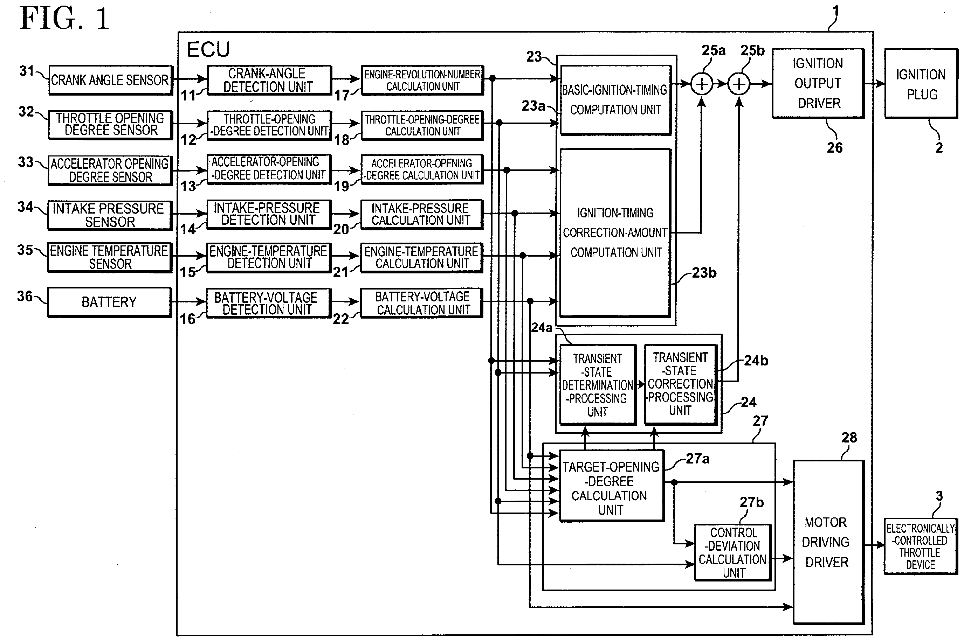

A configuration of an engine control device according to an embodiment of the present invention is explained first in detail with reference to FIG. 1.

FIG. 1 is a block diagram of the configuration of the engine control device according to the present embodiment.

As shown in FIG. 1, an ECU (Electronic Control Unit) 1 that is the engine control device according to the present embodiment is mounted in a vehicle (not shown), and can control an ignition timing of an ignition plug 2 that ignites mixed air in a combustion chamber of an engine (not shown) mounted in the vehicle at an appropriate timing according to an operating state of the engine. Further, the ECU 1 is a component of an electronically-controlled throttle device 3, and can control an opening degree of a throttle valve that is placed in an intake pipe (not shown) connected to the combustion chamber of the engine so as to match a target throttle opening degree.

The ECU 1 includes a crank-angle detection unit 11, a throttle-opening-degree detection unit 12, an accelerator-opening-degree detection unit 13, an intake-pressure detection unit 14, an engine-temperature detection unit 15, a battery-voltage detection unit 16, an engine-revolution-number calculation unit 17, a throttle-opening-degree calculation unit 18, an accelerator-opening-degree calculation unit 19, an intake-pressure calculation unit 20, an engine-temperature calculation unit 21, a battery-voltage calculation unit 22, an ignition-timing control unit 23, an anti-jerk correction-amount computation unit 24, adders 25a and 25b, an ignition output driver 26, an electronically-controlled-throttle control unit 27, and a motor driving driver 28.

The crank-angle detection unit 11 acquires an output electric signal of a crank angle sensor 31 that detects a rotation angle of a timing rotor coaxially attached to a crank mechanism that supports a piston, and outputs the acquired output electric signal to the engine-revolution-number calculation unit 17. The throttle-opening-degree detection unit 12 acquires an output electric signal of a throttle opening degree sensor 32 that detects an opening degree (hereinafter, "actual throttle opening degree") of a throttle valve of the electronically-controlled throttle device 3, and outputs the acquired output electric signal to the throttle-opening-degree calculation unit 18. The accelerator-opening-degree detection unit 13 acquires an output electric signal of an accelerator opening degree sensor 33 that detects an opening degree (hereinafter, "accelerator opening degree") of an accelerator operating member such as an accelerator grip or an accelerator pedal, and outputs the acquired output electric signal to the accelerator-opening-degree calculation unit 19.

The intake-pressure detection unit 14 acquires an output electric signal of an intake pressure sensor 34 that detects the pressure of intake air passing through an intake pipe, and outputs the acquired output electric signal to the intake-pressure calculation unit 20. The engine-temperature detection unit 15 acquires an output electric signal of an engine temperature sensor 35 that detects a temperature such as a water temperature of an engine of a vehicle, and outputs the acquired output electric signal to the engine-temperature calculation unit 21. The battery-voltage detection unit 16 detects a voltage between terminals of a battery 36 mounted in the vehicle, and outputs the detected electric signal to the battery-voltage calculation unit 22.

The engine-revolution-number calculation unit 17 calculates an engine revolution number based on an output signal from the crank-angle detection unit 11, and outputs an electric signal indicating the calculated engine revolution number to the ignition-timing control unit 23, the anti-jerk correction-amount computation unit 24, and the electronically-controlled-throttle control unit 27. The throttle-opening-degree calculation unit 18 calculates an actual throttle opening degree based on an output signal from the throttle-opening-degree detection unit 12, and outputs an electric signal indicating the calculated actual throttle opening degree to the ignition-timing control unit 23, the anti-jerk correction-amount computation unit 24, and the electronically-controlled-throttle control unit 27. The accelerator-opening-degree calculation unit 19 calculates an accelerator opening degree based on an output signal from the accelerator-opening-degree detection unit 13, and outputs an electric signal indicating the calculated accelerator opening degree to the ignition-timing control unit 23 and the electronically-controlled-throttle control unit 27.

The intake-pressure calculation unit 20 calculates the pressure of intake air based on an output signal from the intake-pressure detection unit 14, and outputs an electric signal indicating the calculated pressure of the intake air to the ignition-timing control unit 23 and the electronically-controlled-throttle control unit 27. The engine-temperature calculation unit 21 calculates an engine temperature based on an output signal from the engine-temperature detection unit 15, and outputs an electric signal indicating the calculated engine temperature to the ignition-timing control unit 23 and the electronically-controlled-throttle control unit 27. The battery-voltage calculation unit 22 calculates a voltage between terminals of the battery 36 based on an output signal from the battery-voltage detection unit 16, and outputs an electric signal indicating the calculated voltage between terminals of the battery 36 to the ignition-timing control unit 23, the electronically-controlled-throttle control unit 27, and the motor driving driver 28.

The ignition-timing control unit 23 includes a basic-ignition-timing computation unit 23a and an ignition-timing correction-amount computation unit 23b, and sets an ignition timing of the ignition plug 2 to an appropriate timing according to an operating state of an engine. The basic-ignition-timing computation unit 23a calculates a basic ignition timing of the ignition plug 2 based on an engine revolution number calculated by the engine-revolution-number calculation unit 17 and an actual throttle opening degree calculated by the throttle-opening-degree calculation unit 18. The ignition-timing correction-amount computation unit 23b calculates a correction amount of the basic ignition timing of the ignition plug 2 based on an accelerator opening degree calculated by the accelerator-opening-degree calculation unit 19, the pressure of intake air calculated by the intake-pressure calculation unit 20, an engine temperature calculated by the engine-temperature calculation unit 21, and a voltage between terminals of the battery 36 calculated by the battery-voltage calculation unit 22.

The anti-jerk correction-amount computation unit 24 includes a transient-state determination-processing unit 24a and a transient-state correction-processing unit 24b, and retards an ignition timing of the ignition plug 2 by a predetermined amount when an operating state of an engine is in a transient state of shifting to an acceleration state. The transient-state determination-processing unit 24a determines whether the engine is in a transient state of shifting to an acceleration state based on a change amount of a target opening degree (hereinafter, "target throttle opening degree") of a throttle valve of the electronically-controlled throttle device 3. The transient-state correction-processing unit 24b retards the ignition timing of the ignition plug 2 by a predetermined amount set by the change amount of the target throttle opening degree when the transient-state determination-processing unit 24a determines that an engine is in a transient state of shifting to an acceleration state.

The adder 25a adds a correction amount calculated by the ignition-timing correction-amount computation unit 23b to a basic ignition timing calculated by the basic-ignition-timing computation unit 23a, thereby calculating an ignition timing of the ignition plug 2 according to an operating state of an engine. The adder 25b adds a transient-state correction amount calculated by the anti-jerk correction-amount computation unit 24 to the ignition timing of the ignition plug 2 calculated by the adder 25a, thereby calculating an ignition timing of the ignition plug 2 when an engine is in a transient state of shifting to an acceleration state. The ignition output driver 26 controls an ignition operation of the ignition plug 2 according to the ignition timing of the ignition plug 2 output from the adder 25b.

The electronically-controlled-throttle control unit 27 includes a target-opening-degree calculation unit 27a and a control-deviation calculation unit 27b, and feedback-controls an actual throttle opening degree so as to match a target throttle opening degree. The target-opening-degree calculation unit 27a calculates a target throttle opening degree based on an engine revolution number calculated by the engine-revolution-number calculation unit 17, an actual throttle opening degree calculated by the throttle-opening-degree calculation unit 18, an accelerator opening degree calculated by the accelerator-opening-degree calculation unit 19, the pressure of intake air calculated by the intake-pressure calculation unit 20, an engine temperature calculated by the engine-temperature calculation unit 21, and a voltage between terminals of the battery 36 calculated by the battery-voltage calculation unit 22. The target-opening-degree calculation unit 27a outputs the calculated target throttle opening degree to the control-deviation calculation unit 27b and the motor driving driver 28. The control-deviation calculation unit 27b outputs a deviation between the actual throttle opening degree calculated by the throttle-opening-degree calculation unit 18 and the target throttle opening degree calculated by the target-opening-degree calculation unit 27a to the motor driving driver 28 as a control deviation.

The motor driving driver 28 calculates an operation amount of a motor that drives a throttle valve of the electronically-controlled throttle device 3 based on a target throttle opening degree output from the target-opening-degree calculation unit 27a and a control deviation output from the control-deviation calculation unit 27b and drives the motor in the calculated operation amount, thereby controlling an opening degree of the throttle valve of the electronically-controlled throttle device 3 so as to match the target throttle opening degree.

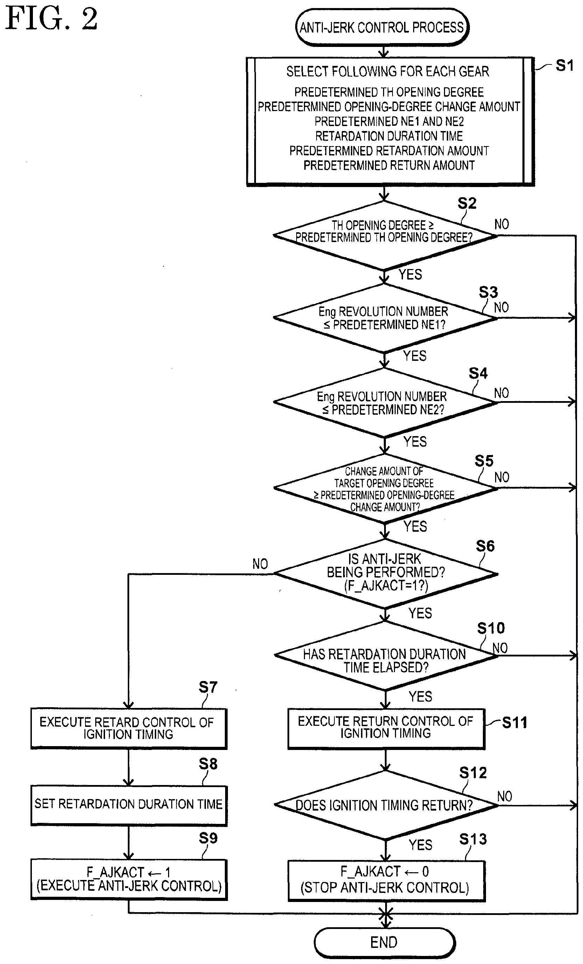

The engine control device having the above configuration performs the following anti-jerk control process, so that it is possible to detect early and precisely that an operating state of an engine is in a transient state of shifting to an acceleration state and to appropriately control an ignition timing of the engine in the transient state, thereby reliably controlling an acceleration shock. An operation of the engine control device at the time of performing such anti-jerk control process is explained below in detail with reference to a flowchart of FIG. 2.

### [Anti-jerk control process]

FIG. 2 is a flowchart of a flow of the anti-jerk control process according to the present embodiment.

The flowchart shown in FIG. 2 starts at a timing that an ignition switch of a vehicle is switched on from an off-state and a substantial operation of the ECU 1 starts, and the anti-jerk control process proceeds to Step S1. The anti-jerk control process is repeated for every predetermined control period. As a program and data that are required for performing the anti-jerk control process, those stored in a memory (not shown) of the ECU 1 are used.

In the process in Step S1, the transient-state determination-processing unit 24a detects the current gear position of the vehicle by using a gear position sensor attached to a transmission (not shown) of the vehicle and reads, with respect to the detected gear position, a predetermined throttle opening degree (a predetermined TH opening degree), a predetermined throttle-opening degree change amount (a predetermined opening-degree change amount), predetermined engine revolution numbers NE1 and NE2 (<NE1) (predetermined NE1 and NE2), a retardation duration time, a predetermined retardation amount, and a predetermined return amount from table-type data that indicates correspondence relationships between these values and the respective gear positions. The process in Step S1 is then completed and the transient-state determination-processing unit 24a proceeds the anti-jerk control process to Step S2.

In the process in Step S2, the transient-state determination-processing unit 24a discriminates whether an actual throttle opening degree (a TH opening degree) calculated by the throttle-opening-degree calculation unit 18 is a large opening degree equal to or larger than the predetermined throttle opening degree acquired by the process in Step S1. As a result of discrimination, when the actual throttle opening degree is a small opening degree less than the predetermined throttle opening degree, the transient-state determination-processing unit 24a ends the current anti-jerk control process. On the other hand, when the actual throttle opening degree is a large opening degree equal to or larger than the predetermined throttle opening degree, the transient-state determination-processing unit 24a proceeds the anti-jerk control process to Step S3.

In the process in Step S3, the transient-state determination-processing unit 24a discriminates whether an engine revolution number (an Eng revolution number) calculated by the engine-revolution-number calculation unit 17 is a low revolution number equal to or less than the predetermined engine revolution number NE1 acquired by the process in Step S1. As a result of discrimination, when the engine revolution number is a high revolution number larger than the predetermined engine revolution number, the transient-state determination-processing unit 24a ends the current anti-jerk control process. On the other hand, when the engine revolution number is a low revolution number equal to or less than the predetermined engine revolution number NE1, the transient-state determination-processing unit 24a proceeds the anti-jerk control process to Step S4.

In the process in Step S4, the transient-state determination-processing unit 24a discriminates whether the engine revolution number (the Eng revolution number) calculated by the engine-revolution-number calculation unit 17 is a high revolution number equal to or larger than the predetermined engine revolution number NE2 acquired by the process in Step S1. As a result of discrimination, when the engine revolution number is a low revolution number less than the predetermined engine revolution number, the transient-state determination-processing unit 24a ends the current anti-jerk control process. On the other hand, when the engine revolution number is a high revolution number equal to or larger than the predetermined engine revolution number NE2, the transient-state determination-processing unit 24a proceeds the anti-jerk control process to Step S5.

In the process in Step S5, the transient-state determination-processing unit 24a determines whether an operating state of an engine is in a transient state of shifting to an acceleration state based on a change amount of a target throttle opening degree (a target opening degree) calculated by the target-opening-degree calculation unit 27a by determining whether the a change amount is equal to or larger than the predetermined opening-degree change amount.

As a result of discrimination, when the change amount of the target throttle opening degree is less than the predetermined opening-degree change amount acquired by the process in Step S1, the transient-state determination-processing unit 24a ends the current anti-jerk control process. On the other hand, when the change amount of the target throttle opening degree is equal to or larger than the predetermined opening-degree change amount acquired by the process in Step S1, the transient-state determination-processing unit 24a determines that the target throttle opening degree has suddenly changed and proceeds the anti-jerk control process to Step S6.

In the process in Step S6, the transient-state determination-processing unit 24a discriminates whether a value of a flag F_AJKACT that indicates whether the anti-jerk control process is being performed is 1, thereby discriminating whether the anti-jerk has already been performed. As a result of discrimination, when the value of the flag F_AJKACT is 0, the transient-state determination-processing unit 24a determines that the anti-jerk control process has not been performed yet and proceeds the anti-jerk control process to Step S7. On the other hand, when the value of the flag F_AJKACT is 1, the transient-state determination-processing unit 24a determines that the anti-jerk control process has already been performed and proceeds the anti-jerk control process to Step S10.

In the process in Step S7, the transient-state correction-processing unit 24b calculates a correction amount of an ignition timing of the ignition plug 2 as a transient-state correction amount so as to execute retard control of the ignition timing of the ignition plug 2 according to the predetermined retardation amount acquired by the process in Step S1, and outputs the calculated transient-state correction amount to the adder 25b. According to the present embodiment, when a deviation between an actual throttle opening degree and a target throttle opening degree is equal to or larger than a predetermined opening-degree change amount, retard control of retarding the ignition timing of the ignition plug 2 by a predetermined amount is executed. However, a retardation amount can be variably set according to the magnitude of the deviation. The process in Step S7 is then completed and the transient-state determination-processing unit 24a proceeds the anti-jerk control process to Step S8.

In the process in Step S8, the transient-state correction-processing unit 24b sets the retardation duration time acquired by the process in Step S1 in a subtraction timer for measuring a retard control time of the ignition timing of the ignition plug 2, and switches on the subtraction timer. The process in Step S8 is then completed and the transient-state determination-processing unit 24a proceeds the anti-jerk control process to Step S9.

In the process in Step S9, the transient-state correction-processing unit 24b sets the value of the flag F_AJKACT that indicates whether the anti-jerk control process is being performed to 1 (the anti-jerk control process being performed) . The process in Step S9 is then completed and the current anti-jerk control process ends.

In the process in Step S10, the transient-state correction-processing unit 24b discriminates whether a value of the subtraction timer switched on by the process in Step S8 is 0, thereby discriminating whether the retard control of the ignition timing of the ignition plug 2 is continuously executed for the retardation duration time acquired by the process in Step S1. As a result of discrimination, when the retard control is not continuously executed for the retardation duration time, the transient-state correction-processing unit 24b ends the current anti-jerk control process. On the other hand, when the retard control is continuously executed for the retardation duration time, the transient-state correction-processing unit 24b proceeds the anti-jerk control process to Step S11.

In the process in Step S11, the transient-state correction-processing unit 24b calculates the correction amount of the ignition timing of the ignition plug 2 as a transient-state correction amount so as to execute return control of gradually returning the ignition timing of the ignition plug 2 to an ignition timing output from the adder 25a according to the predetermined return amount acquired by the process in Step S1, and outputs the calculated transient-state correction amount to the adder 25b. By executing the retard control for the retardation duration time and then executing the return control, it is possible to suppress an unnecessary variation in an engine output, thereby suppressing occurrence of an unnecessary shock in a vehicle. The process in Step S11 is then completed, and the transient-state determination-processing unit 24a proceeds the anti-jerk control process to Step S12.

In the process in Step S12, the transient-state correction-processing unit 24b discriminates whether the ignition timing of the ignition plug 2 returns to the ignition timing output from the adder 25a. As a result of discrimination, when the ignition timing does not return, the transient-state correction-processing unit 24b ends the current anti-jerk control process. On the other hand, when the ignition timing returns, the transient-state correction-processing unit 24b proceeds the anti-jerk control process to Step S13.

In the process in Step S13, the transient-state correction-processing unit 24b sets the value of the flag F_AJKACT that indicates whether the anti-jerk control process is being performed to 0 (the anti-jerk control process being stopped). The process in Step S13 is then completed and the current anti-jerk control process ends.

In the engine control device according to the present embodiment described above, the transient-state determination-processing unit 24a determines whether an operating state of an engine is in a transient state of shifting to an acceleration state based on a change amount of a target throttle opening degree. When it is determined that the operating state of the engine is in the transient state of shifting to the acceleration state, the transient-state correction-processing unit 24b retards an ignition timing of the engine by a predetermined amount set by the change amount of the target throttle opening degree. With this configuration, because the change amount of the target throttle opening degree is used as a parameter for determining an operating state of an engine, it is possible to detect early and precisely that an operating state of an engine is in a transient state of shifting to an acceleration state and to appropriately control an ignition timing in the transient state, thereby reliably suppressing an acceleration shock.

In the engine control device according to the embodiment of the present invention, the transient-state determination-processing unit 24a can use a deviation amount between an actual throttle opening degree and a target throttle opening degree as the change amount of the target throttle opening degree. Therefore, it is possible to detect a change amount and a change direction of the actual throttle opening degree and thus to detect early and precisely that an operating state of an engine is in a transient state of shifting to an acceleration state.

In the present invention, the type, the arrangement, the number, and the like of the constituent elements are not limited to those in the embodiment explained above, and it is needless to mention that the constituent elements can be modified as appropriate , such as appropriately replacing these elements by other ones having identical operational effect, without departing from the scope of the enclosed claims.

## Claims

1. An engine control device (1) comprising:
an electronically-controlled-throttle control unit (27) that calculates a target throttle opening degree based on an accelerator opening degree and feedback-controls an actual throttle opening degree of a throttle valve so as to match the target throttle opening degree;
an ignition-timing control unit (23) that controls an ignition timing of an engine based on an operating state of the engine;
a transient-state determination-processing unit (24a) that determines whether the operating state of the engine is in a transient state of shifting to an acceleration state based on a deviation amount between the actual throttle opening degree and the target throttle opening degree; and
a transient-state correction-processing unit (24b) that retards the ignition timing by a predetermined amount set by the deviation amount between the actual throttle opening degree and the target throttle opening degree when the transient-state determination-processing unit (24a) determines that the operating state of the engine is in the transient state,
wherein the transient-state determination-processing unit (24a) determines that the operating state of the engine is in the transient state when the actual throttle opening degree is equal to or greater than a predetermined throttle opening degree, a revolution number of the engine is within a predetermined range and the deviation amount between the actual throttle opening degree and the target throttle opening degree is equal to or greater than a predetermined deviation amount.

2. The engine control device (1) according to claim 1, wherein the predetermined target throttle opening degree, the predetermined range and the predetermined deviation amount are previously set corresponding to a gear position of a transmission.

## Patentansprüche

1. Motorsteuerungsvorrichtung (1), aufweisend:
eine elektronisch gesteuerte Drossel-Steuereinheit (27), die einen Soll-Drossel-Öffnungsgrad basierend auf einem Beschleuniger-Öffnungsgrad berechnet und einen Ist-Drossel-Öffnungsgrad eines Drosselventils rückkopplungssteuert, um dem Soll-Drossel-Öffnungsgrad zu entsprechen;
eine Zündzeitpunktsteuereinheit (23), die einen Zündzeitpunkt eines Motors basierend auf einem Betriebszustand des Motors steuert;
eine Übergangszustands-Bestimmungs-Verarbeitungseinheit (24a), die basierend auf einem Abweichungsbetrag zwischen dem Ist-Drossel-Öffnungsgrad und dem Soll-Drossel-Öffnungsgrad bestimmt, ob sich der Betriebszustand des Motors in einem Übergangszustand des Wechsels in einen Beschleunigungszustand befindet; und
eine Übergangszustands-Korrekturverarbeitungseinheit (24b), die den Zündzeitpunkt um einen vorbestimmten Betrag verzögert, der durch den Abweichungsbetrag zwischen dem Ist-Drossel-Öffnungsgrad und dem Soll-Drossel-Öffnungsgrad eingestellt ist, wenn die Übergangszustands-Bestimmungs-Verarbeitungseinheit (24a) bestimmt, dass der Betriebszustand des Motors in dem Übergangszustand ist,
wobei die Übergangszustands-Bestimmungs-Verarbeitungseinheit (24a) bestimmt, dass sich der Betriebszustand des Motors in dem Übergangszustand befindet, wenn der Ist-Drossel-Öffnungsgrad gleich oder größer als ein vorbestimmter Drossel-Öffnungsgrad ist, eine Drehzahl des Motors innerhalb eines vorbestimmten Bereichs liegt und der Abweichungsbetrag zwischen dem Ist-Drossel-Öffnungsgrad und dem Soll-Drossel-Öffnungsgrad gleich oder größer als ein vorbestimmter Abweichungsbetrag ist.

2. Motorsteuervorrichtung (1) nach Anspruch 1, wobei der vorgegebene Soll-Drossel-Öffnungsgrad, der vorbestimmte Bereich und der vorbestimmte Abweichungsbetrag vorab entsprechend einer Gangstellung eines Getriebes eingestellt werden.

## Revendications

1. Dispositif de commande de moteur (1) comprenant :
une unité de commande de papillon à commande électronique (27) qui calcule un degré d'ouverture de papillon cible sur la base d'un degré d'ouverture d'accélérateur et commande par rétroaction un degré d'ouverture de papillon réel d'un papillon des gaz de façon à correspondre au degré d'ouverture de papillon cible ;
une unité de commande de calage d'allumage (23) qui commande une calage d'allumage d'un moteur sur la base d'un état de fonctionnement du moteur ;
une unité de traitement de détermination d'état transitoire (24a) qui détermine si l'état de fonctionnement du moteur est dans un état transitoire de passage à un état d'accélération sur la base d'une quantité d'écart entre le degré d'ouverture de papillon réel et le degré d'ouverture de papillon cible ; et
une unité de traitement de correction d'état transitoire (24b) qui retarde le calage d'allumage d'une quantité prédéterminée définie par la quantité d'écart entre le degré d'ouverture de papillon réel et le degré d'ouverture de papillon cible lorsque l'unité de traitement de détermination d'état transitoire (24a) détermine que l'état de fonctionnement du moteur est dans l'état transitoire,
l'unité de traitement de détermination d'état transitoire (24a) déterminant que l'état de fonctionnement du moteur est dans l'état transitoire lorsque le degré d'ouverture de papillon réel est égal ou supérieur à un degré d'ouverture de papillon prédéterminé, qu'un nombre de tours du moteur se trouve dans une plage prédéterminée et la quantité d'écart entre le degré d'ouverture de papillon réel et que le degré d'ouverture de papillon cible est égale ou supérieure à une quantité d'écart prédéterminée.

2. Dispositif de commande de moteur (1) selon la revendication 1, dans lequel le degré d'ouverture de papillon cible prédéterminé, la plage prédéterminée et la quantité d'écart prédéterminée sont préalablement définis en correspondance avec une position d'engrenage d'une transmission.
